# EUROPEAN PATENT APPLICATION

(11) **EP 3 698 916 A1**
(43) Date of publication of application: **26.08.2020**
(21) Application number: 18869157.0
(22) Date of filing: 05.02.2018
(51) Int. Cl.: B23P 19/06

(54) **REACTION-FORCE MECHANICAL ARM FOR BOLT TIGHTENER AND BATTERY PACK REPLACEMENT SYSTEM**

(30) Priority: 19.10.2017 CN 201710976039
(71) Applicant: NIO Nextev Limited, Central, Hong Kong (HK)
(72) Inventor: DING, Xikun, Jiading, Shanghai (CN); BENGTSSON, Jan, Jiading, Shanghai (CN); LI, Nan, Jiading, Shanghai (CN); TIAN, Xiaotao, Jiading, Shanghai (CN)
(74) Representative: Vossius & Partner Patentanwälte Rechtsanwälte mbB
(86) International application number: PCT/CN2018/075248
(87) International publication number: WO 2019/075961

(57) **Abstract**

The invention provides a counterforce mechanical arm for a tightening gun and a battery pack changing system. The counterforce mechanical arm comprises: a fixed post whose bottom is fixed to an operating platform; a rotating arm connected to a top of the fixed post, and the rotating arm is rotatable relative to the fixed post in a horizontal plane; a telescopic arm wherein the rotating arm defines a slideway extending in a horizontal direction, the telescopic arm being fitted into the slideway of the rotating arm, the telescopic arm being capable of linear motion relative to the rotating arm by means of the slideway; a lifting arm connected to the telescopic arm and can go up and down in a vertical direction relative to the telescopic arm; and a tightening gun mount connected to the top of the lifting arm, and used for fixing a tightening gun. The counterforce mechanical arm and the battery pack changing system according to the invention are compact in structure, convenient to operate and low in cost.

## Description

### FIELD OF THE INVENTION

The invention relates to the field of mechanical arms for tightening guns, in particular to a counterforce mechanical arm of a bolt tightening gun for, for example, an electric automobile battery pack changing system, and a battery pack changing system with the same.

### BACKGROUND OF THE INVENTION

The manual battery changing system of the electric automobile needs accurate changing of the bottom battery pack without error. While dismounting the battery pack, the tightening gun is required to be aligned from bottom toward top and to press against the bolted cap, and due to space and cost consideration, it is desired that the number of bolts that can be covered by one counterforce mechanical arm is as much as possible, and meanwhile the flexibility and convenience of operation are guaranteed.

As recorded in China Utility Model CN204524747U, in prior art, the lifting of a mechanical hand of the counterforce folding arm in the field of industry such as the automobile assembling field is completed by the parallelogram principle, the large-range coverage is realized by two rotating folding arms in horizontal direction, and while the vertical lifting of the same position is achieved, the cooperation of rotation in horizontal direction is needed.

### SUMMARY OF THE INVENTION

It is an object of the present invention to address or at least alleviate the problems existing in the prior art.

It is an object of the present invention to provide a counterforce mechanical arm for a tightening gun and a battery pack changing system with the same, which is small in footprint, fast and convenient to operate, simple in structure and low in cost.

In one aspect, there is provided a counterforce mechanical arm for a tightening gun, comprising:
a fixed post whose bottom is fixed to an operating platform;
a rotating arm connected to a top of the fixed post, and the rotating arm is rotatable relative to the fixed post in a horizontal plane;
a telescopic arm wherein the rotating arm defines a slideway extending in a horizontal direction, the telescopic arm being fitted into the slideway of the rotating arm, the telescopic arm being capable of linear motion relative to the rotating arm by means of the slideway;
a lifting arm connected to the telescopic arm and can go up and down in a vertical direction relative to the telescopic arm; and
a tightening gun mount connected to the top of the lifting arm, and used for mounting a tightening gun.

Optionally, in the counterforce mechanical arm described above, the counterforce mechanical arm further comprises a supporting arm spaced apart from the rotating arm and assisting in supporting the telescopic arm.

Optionally, in the counterforce mechanical arm described above, the bottom of the supporting arm is provided with a pulley.

Optionally, in the counterforce mechanical arm described above, the supporting arm is telescopic, and the bottom of the supporting arm is pivotally connected to the fixed post.

Optionally, in the counterforce mechanical arm described above, the supporting arm comprises a vertical bar and a cross bar connected to the bottom of the vertical bar, and a pair of brake castors are provided at the bottom of the cross bar.

Optionally, in the counterforce mechanical arm described above, the lifting arm is connected to an end of the telescopic arm, and optionally, the supporting arm is connected to a position on the telescopic arm between the lifting arm and the rotating arm.

Optionally, in the counterforce mechanical arm described above, the counterforce mechanical arm further comprises a booster spring connected between the bottom of the lifting arm and the supporting arm.

Optionally, in the counterforce mechanical arm described above, the tightening gun mount is rotatable relative to the lifting arm in the horizontal plane.

Optionally, in the counterforce mechanical arm described above, the counterforce mechanical arm further comprises a locking mechanism including a linkage, a first end of the linkage being pivotally connected to the top of the lifting arm, a second end of the linkage being pivotally connected to a lock, the lock being selectively secured to one of a plurality of positions along the length of the telescopic arm. Optionally, in the counterforce mechanical arm described above, the locking mechanism is a pawl locking mechanism, the telescopic arm is provided with a rack along the length, the lock is provided with a pawl, and the pawl of the lock is connected with an operating handle so as to be selectively engaged with the rack on the telescopic arm in different positions.

Optionally, in the counterforce mechanical arm described above, the telescopic arm is provided with a chute extending in a length direction, and the lock is fixed to different positions of the chute of the telescopic arm by means of bolts.

In another aspect, there is provided a battery pack changing system comprising: a lifting bracket and the counterforce mechanical arm according to embodiments, the counterforce mechanical arm is provided with a tightening gun.

Optionally, in the battery pack changing system described above, the tightening gun comprises a gun body and a gun head, the gun body of the tightening gun being mounted into a clamp of the tightening gun mount, the gun head is in an upward orientation, the fixed position of the tightening gun relative to the tightening gun mount being adjustable.

Optionally, in the battery pack changing system described above, the battery pack changing system comprises a pair of counterforce mechanical arms, the pair of counterforce mechanical arms are disposed on the front and rear sides of the lift bracket, respectively, and the pair of counterforce mechanical arms are also disposed on the left and right sides of the lift bracket, respectively.

The counterforce mechanical arm for tightening gun and the battery pack changing system according to the present invention are simple in structure and convenient to operate.

### BRIEF DESCRIPTION OF THE DRAWINGS

The principles of the present invention will become more apparent from the following detailed description read in conjunction with the accompanying drawings, in which:
FIG. 1 shows a perspective view of a battery pack changing system and an automobile thereon, in accordance with an embodiment;
FIG. 2 shows a perspective view of a counterforce mechanical arm and a tightening gun thereon, in accordance with an embodiment;
FIG. 3 shows a side view of a counterforce mechanical arm and a tightening gun thereon, in accordance with an embodiment; and
FIG. 4 shows a partially enlarged view of the locking mechanism in FIG. 3.

### DETAILED DESCRIPTION OF THE EMBODIMENT(S) OF THE INVENTION

It is easily understood that, according to the technical solution of the present invention, one of ordinary skill in the art may propose various structures and implementations that may be interchanged with one another without altering the true spirit of the present disclosure. Accordingly, the following detailed description and drawings are merely exemplary illustration of the technical solutions of the invention and should not be taken as the whole of the present invention or as definitions or limitations on the technical solution of the invention.

Oriental terms such as upper, lower, left, right, forward, backward, front, back, top, bottom, etc., mentioned or possibly mentioned in this specification are defined with respect to the configurations shown in the various figures, they are relative concepts and thus may vary accordingly depending on the location in which they are located, and different states of use. Therefore, these and other oriental terms should not be construed as limiting terms.

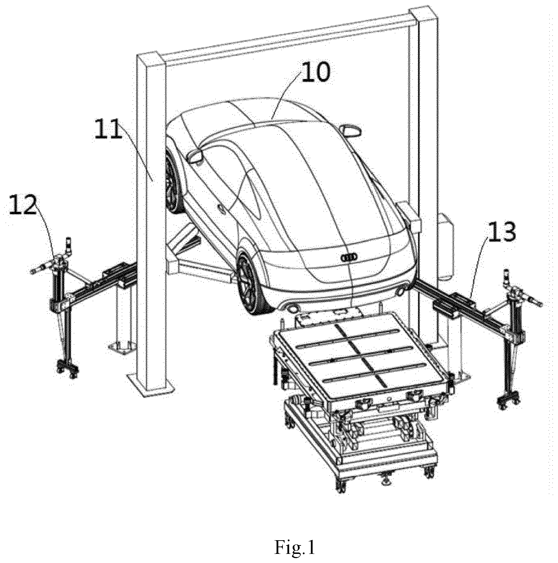

Referring firstly to FIG. 1, a perspective view of a battery pack changing system and an automobile thereon according to an embodiment is shown. As shown in FIG. 1, the battery pack changing system includes a lift bracket 11 disposed on an operating platform. The lift bracket 11 may raise the vehicle 10 to an appropriate height and may complete the battery pack changing operation at this appropriate height. The battery pack changing system also includes a counterforce mechanical arm in accordance with an embodiment of the present invention. Specifically, in the illustrated embodiment, the battery pack changing system includes a first counterforce mechanical arm 12 and a second counterforce mechanical arm 13 with tightening guns disposed thereon. The gun head or torque output end of the tightening gun is arranged in an upward orientation to facilitate disassembling and tightening operation of the bolt at the bottom of the vehicle 10 to enable battery pack changing. In alternative embodiments, the battery pack changing system may include a larger or smaller number of counterforce mechanical arms.

In some embodiments, the first and second counterforce mechanical arms 12, 13 are disposed on the front and rear sides of the lift bracket 11 respectively, and the first and second counterforce mechanical arms 12, 13 are also disposed on the left and right sides of the lift bracket 11 respectively. In the illustrated embodiment, the first counterforce mechanical arm 12 is disposed on a left front side of the lift bracket 11 and the second counterforce mechanical arms 13 is disposed on a right rear side of the lift bracket 11. Therefore, the bottom of the whole vehicle 10 can be covered by a pair of counterforce mechanical arms.

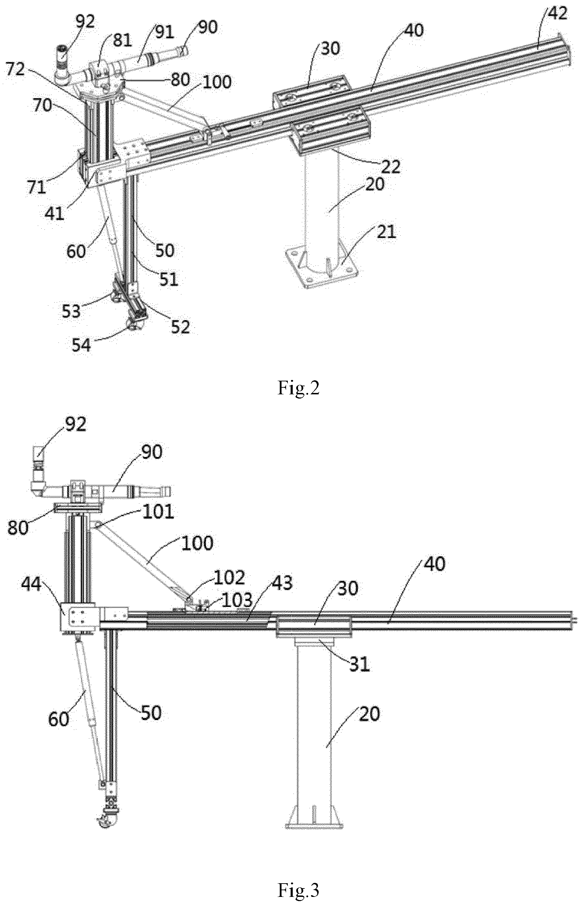

With continued reference to FIGS. 2 and 3, detailed structures of the counterforce mechanical arm are shown. The counterforce mechanical arm comprises: a fixed post 20 whose bottom 21 is secured to the operating platform, such as a countertop or floor. The fixed post 20 may have a cylindrical shape and the top 22 of the fixed post 20 may be connected to the rotating arm 30 by any known means such that the rotating arm 30 is rotatable in a horizontal plane relative to the fixed post 20. As shown in FIG. 3, the top of the fixed post 20 is inserted into the sleeve 31 at the bottom of the rotating arm 30 to enable a rotatable connection of the rotating arm 30 to the fixed post 20. The rotating arm 30 defines a slideway, such as a horizontally extending slideway, a telescopic arm fits 40 into the slideways of the rotating arm 30. The telescopic arm 40 may slide along the slideway of the rotating arm 30 to enable a telescoping motion, for example, by way of the slideway, the telescopic arm 40 is capable of linear motion in a horizontal plane relative to the rotating arm 30. The counterforce telescopic arm also includes a lifting arm 70 that is connected to the telescopic arm 40 and may go up and down in a vertical direction relative to the telescopic arm 40, e.g., the telescopic arm 40 may have a slot or a sleeve 44, and the lifting arm 70 may be disposed at the slot or sleeve 44, and may move up-and-down in a vertical direction relative to the slot or sleeve 44 in order to go up and down in a vertical direction. A tightening gun mount 80 is disposed on the top 72 of the lifting arm for mounting the tightening gun 90.

Based on the above structure, the whole counterforce mechanical arm can be adjusted in multiple degrees of freedom. First, a large-range position adjustment of the tightening gun in the horizontal direction can be achieved by the rotating arm 30 and the telescopic arm 40, and the height of the tightening gun can be adjusted by the lifting arm 70.

In some embodiments, the counterforce mechanical arm may also include a supporting arm 50 that is spaced apart from the rotating arm 30 and assists in supporting the telescopic arm 40, thereby giving the telescopic arm 40 a two-point support, making it more stable. In some embodiments, the bottom of the supporting arm 50 is supported by the ground, and in other embodiments, the bottom of the supporting arm 50 may be connected to the fixed mount by a spherical hinge, and the supporting arm 50 is telescopic. In some embodiments, the supporting arm 50 is connected to a position near the end of the telescopic arm 40 such that the supporting arm 50 and the fixed post 20 are sufficiently spaced to provide more stable support for the telescopic arm 40.

Still further, the position of the tightening gun can be fine-tuned by the tightening gun mount 80. Specifically, in some embodiments, the tightening gun mount 80 is rotatable in a horizontal plane relative to the lifting arm 70, and on the other hand, the fixed position of the tightening gun 90 relative to the tightening gun mount 80 may be adjustable, for example, the tightening gun 90 may include a gun body 91 and a gun head 92, the fine tuning of the position of the tightening gun may be achieved by securing different portions of the gun body 91 into the clamp 81 of the tightening gun mount 80.

In some embodiments, a pulley, such as a brake castor, is provided at the bottom of the supporting arm 50. In some embodiments, the supporting arm 50 includes a vertical bar 51 and a cross bar 52 connected to the bottom of the vertical bar 51, while the crossbar 52 is provided with a pair of brake castors 53, 54 at the bottom. After the telescopic arm 40 is adjusted in position, the brake castors 53, 54 may be locked to avoid further movement of the telescopic arms 40. By means of the design of the pulley, the rotation and telescoping of the telescopic arm 40 will be smoother.

In some embodiments, the telescopic arm 40 includes a first end 41 connected to the lifting arm 70 and a second end 42 opposite to the first end 41. In order to take full advantage of the length of the telescopic arm 40, the lifting arm 70 is connected to the end of the telescopic arm 40. In addition, the supporting arm 50 is connected to a position on the telescopic arm 40 between the lifting arm 70 and the rotating arm 30, such as the position between the lifting arm 70 and the rotating arm 30 closest to the first end 41 of the telescopic arm. As such, the supporting arm 50 is spaced sufficiently apart from the fixed post 20 to provide more stable support for the telescopic arm 40.

In some embodiments, the counterforce mechanical arm further includes a booster spring 60 connected between the lifting arm bottom 71 and the supporting arm 50. The booster spring 60 acts on the lifting arm 70. The booster spring 60 provides assistance when adjusting the lifting arm 70, making the height adjustment of the lifting arm 70 more labor-saving, providing convenience for the operation of the counterforce mechanical arm 70.

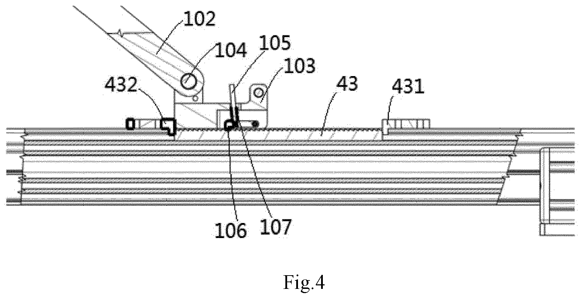

Referring to FIGS. 3 and 4, in some embodiments, the counterforce mechanical arm further includes a locking mechanism including a linkage 100 having a first end 101 pivotally connected to the top of the lifting arm 70, and a second end 102 pivotally connected to the lock 103, the lock 103 being selectively secured to one of a plurality of positions along the length of the telescopic arm 40. In some embodiments, the telescopic arm 40 may have a chute extending in the length direction, the lock 103 is movable along the chute on the telescopic arm and is positioned in a plurality of positions along the length of the telescopic arm 40 by means of a bolt. In a further embodiment, the locking mechanism is a pawl locking mechanism, the telescopic arm is provided with a rack 43 along the length direction, the two ends of the rack 43 may have limiting bosses 431, 432, the locking member 103 includes a pawl 106, an operating handle 105 connected to the pawl 106, and a reset spring 107. The operating handle 105 may be toggled such that the pawl 106 and the rack 43 are decoupled to move the lock 103 along the rack 43 to various positions while the lifting arm 70 is driven to go up and down accordingly due to the linkage 100. The lifting of the lifting arm is assisted by the booster spring 60. After the lifting arm 70 is adjusted in position, the operating handle 105 is released and, under the action of the reset spring 107, the pawl 106 engages the appropriate position of the rack 43, the position of the lock 103 is fixed, and the height of the lifting arm 70 and the tightening gun mount 80 thereon are fixed. Based on the pawl locking mechanism, the height of the lifting arm 70 can be adjusted more conveniently, further providing the operation convenience of the counterforce mechanical arm.

With respect to the conventional structure, the present application employs a pair of counterforce mechanical arms instead of the mechanical arm based on parallelogram principle, the advantages of which include, but are not limited to:
1. a smaller footprint;
2. more convenient operation and higher efficiency of operation; and
3. lower costs.

It is to be understood that all of the above preferred embodiments are exemplary and not restrictive, and that various modifications and variations made to the specific embodiments described above by those skilled in the art under the concept of the present invention are within the legally protective scope of the invention.

## Claims

1. A counterforce mechanical arm for a tightening gun, comprising:
a fixed post whose bottom is fixed to an operating platform;
a rotating arm connected to a top of the fixed post, and the rotating arm is rotatable relative to the fixed post in a horizontal plane;
a telescopic arm, wherein the rotating arm defines a slideway extending in a horizontal direction, the telescopic arm being fitted into the slideway of the rotating arm, the telescopic arm being capable of linear motion relative to the rotating arm by means of the slideway;
a lifting arm connected to the telescopic arm and can go up and down in a vertical direction relative to the telescopic arm; and
a tightening gun mount connected to the top of the lifting arm, and used for mounting a tightening gun.

2. The counterforce mechanical arm of claim 1, wherein the counterforce mechanical arm further comprises a supporting arm spaced apart from the rotating arm and assisting in supporting the telescopic arm.

3. The counterforce mechanical arm of claim 2, wherein the bottom of the supporting arm is provided with a pulley.

4. The counterforce mechanical arm of any of claims 1 to 3, wherein the lifting arm is connected to an end of the telescopic arm.

5. The counterforce mechanical arm of claim 4, wherein the counterforce mechanical arm further comprises a booster spring connected between the bottom of the lifting arm and the supporting arm.

6. The counterforce mechanical arm of any of claims 1 to 3, wherein the tightening gun mount is rotatable relative to the lifting arm in the horizontal plane.

7. The counterforce mechanical arm of any of claims 1 to 3, wherein the counterforce mechanical arm further comprises a locking mechanism including a linkage, a first end of the linkage being pivotally connected to the top of the lifting arm, a second end of the linkage being pivotally connected to a lock, the lock being selectively secured to one of a plurality of positions along the length of the telescopic arm.

8. The counterforce mechanical arm of claim 7, wherein the locking mechanism is a pawl locking mechanism, the telescopic arm is provided with a rack along the length, the lock is provided with a pawl, and the pawl of the lock is connected with an operating handle so as to be selectively engaged with the rack on the telescopic arm in different positions.

9. The counterforce mechanical arm of claim 7, wherein the telescopic arm is provided with a chute extending in a length direction, and the lock is fixed to different positions of the chute of the telescopic arm by means of bolts.

10. A battery pack changing system, comprising: a lifting bracket and the counterforce mechanical arm of any of claims 1 to 9, the counterforce mechanical arm is provided with a tightening gun.

11. The battery pack changing system of claim 10, wherein the tightening gun comprises a gun body and a gun head, the gun body of the tightening gun being mounted into a clamp of the tightening gun mount, the gun head is in an upward orientation, the fixed position of the tightening gun relative to the tightening gun mount being adjustable.

12. The battery pack changing system of claims 10 or 11, wherein the battery pack changing system comprises a pair of counterforce mechanical arms, the pair of counterforce mechanical arms are disposed on the front and rear sides of the lift bracket, respectively, and the pair of counterforce mechanical arms are also disposed on the left and right sides of the lift bracket, respectively.
